# FASCICULE DE BREVET EUROPEEN

(11) **EP 1 002 819 B1**
(45) Date de publication et mention de la délivrance du brevet: **13.08.2003**
(21) Numéro de dépôt: 99402821.5
(22) Date de dépôt: 15.11.1999
(51) Int. Cl.: C08G 63/00, C08G 67/02, B32B 27/36

(54) **Utilisation d'une structure a base de poly(dimethylcetene) et objets comprenant cette structure**
Verwendung einer Struktur auf der Basis von Dimethylketen und diese Struktur enthaltende Gegenstände
Use of a structure on the basis of dimethylketene and articles comprising this structure

(30) Priorité: 20.11.1998 FR 9814926
(43) Date de publication de la demande: 24.05.2000
(73) Titulaire: Atofina, 92800 Puteaux (FR)
(72) Inventeur: Egret, Hélène, 76350 Oissel (FR); Bunel, Claude, 76420 Bihorel (FR); Couvercelle, Jean-Pierre, 76690 Fontaine le Bourg (FR); Werth, Michael, 27300 Bernay (FR); Germain, Yves, 27470 Serquigny (FR)
(74) Mandataire: Neel, Henry

(56) Documents cités:
- EP-A- 0 816 067
- GB-A- 987 370
- US-A- 3 321 441
- US-A- 3 350 357
- US-A- 3 917 546
- US-A- 3 932 318
- CHEMICAL ABSTRACTS, vol. 66, no. 14, 3 avril 1967 (1967-04-03) Columbus, Ohio, US; abstract no. 61644, XP002129523 & YOSHIDA, KENJI; YAMASHITA, YUYA: "Mechanism of anionic polymerization of dimethylketene" MAKROMOL. CHEM., vol. 1967, no. 100, pages 175-185,
- CHEMICAL ABSTRACTS, vol. 66, no. 10, 6 mars 1967 (1967-03-06) Columbus, Ohio, US; abstract no. 43542, XP002129524 & GANIS, PAOLO; TEMUSSI, PIERO A.: "Conformational analysis of the two crystalline forms alpha and beta of poly(dimethylketene) with ketonic enchainment" EUR. POLYM. J., vol. 1966, no. 2(4), pages 401-411,
- CHEMICAL ABSTRACTS, vol. 68, no. 6, 5 février 1968 (1968-02-05) Columbus, Ohio, US; abstract no. 26794, XP002129525 & BASSI, IVANO W., GANIS, PAOLO; TEMUSSI, PIERO A.: "Chain deformation and crystal structure of the alpha-polymorphic form of poly(dimethylketene)" J. POLYM. SCI., POLYM. SYMP., no. 16(Pt. 5), 1967, pages 2867-76,

## Description

La présente invention concerne l'utilisation d'une structure à base de poly(dimethylcetene) et les objets comprenant cette structure.

Plus précisément l'invention concerne l'utilisation dune structure comprenant au moins une couche d'un polymère (A) constitué par les motifs (A1) 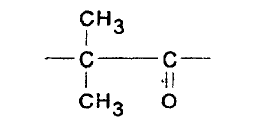 et les motifs (A2) 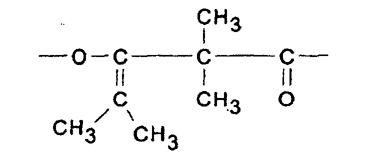 et tel que le rapport molaire A2 / (A1 + A2) est compris entre 0 et 30 %.

L'art antérieur GB 893308 décrit des polymères contenant 81,6 % en poids de motifs (A1) obtenus par polymérisation du dimethylcetene 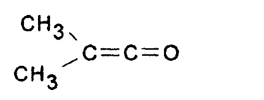 en présence de bromure d'aluminium. Le polymère en poudre ainsi obtenu subit successivement des extractions par différents solvants à l'ébullition à savoir l'acétone, l'éther et le toluène. Il reste 81,6 % du polymère d'origine non extractible par le toluène, sa température de fusion est 255°C. La diffraction montre une structure cristalline. Ces polymères n'ont pas été transformés en films.

L'art antérieur US 3321441 décrit la polymérisation du dimethylcetene en présence d'une base forte et l'obtention d'un polymère constitué de motifs (A2).

Aucun de ces documents ne décrit les propriétés barrière des films de polymère (A). La demanderesse a découvert que les films en polymère (A) étaient de bonnes barrières aux gaz, aux hydrocarbures et aux essences pour les automobiles.

La demanderesse a aussi découvert que les films en polymère (A) de l'invention étaient de très bonnes barrières à l'oxygène et que cette propriété était peu sensible à l'humidité relative (RH). Les films en EVOH, copolymère de l'éthylène et de l'alcool vinylique (aussi appelés produits de saponification des copolymères de l'éthylène et de l'acétate vinyle) ont un niveau de barrière à l'oxygène du même ordre que ceux constitués du polymère (A) pourvu que l'humidité relative ne dépasse pas 50 %. Au-delà de 50 % RH l'EVOH perd une grande partie de ses propriétés barrières.

La structure utilisée dans l'invention peut être monocouche c'est à dire n'être qu'une couche du polymère (A).

La structure utilisée dans l'invention peut être multicouches c'est-à-dire qu'elle comprend au moins une couche du polymère (A) et au moins une couche du polymère (B), un liant pouvant être disposé entre les couches (A) et (B).

Selon une autre forme la structure utilisée dans l'invention peut comprendre respectivement un polymère (C), le polymère (A), un polymère (B) un liant pouvant être disposé entre les couches (C) et (A) et/ou entre les couches (A) et (B).

La structure monocouche de l'invention peut être un film.

La présente invention concerne aussi les objets fabriqués avec l'une quelconque des structures mono ou multicouches précédentes.

La présente invention concerne des emballages et des corps creux tels que des tubes, des bouteilles et des conteneurs comprenant l'une quelconque des structures précédentes. Les emballages sont par exemple des sacs et des sachets qu'on obtient avec les dites structures mono ou multicouches se présentant sous forme de film mono ou multicouches. Des corps creux particulièrement intéressants sont les réservoirs d'essence pour les automobiles. Ces réservoirs peuvent être selon une structure telle que la couche de polymère (A) est soit en contact direct avec l'essence soit n'est pas en contact direct avec l'essence. Des tuyaux particulièrement intéressants sont ceux utilisés pour véhiculer l'essence dans les stations service entre les réservoirs de stockage et les camions qui viennent remplir ces réservoirs ou les tuyaux qui relient les réservoirs de stockage et les pompes de distribution pour les véhicules tels que les automobiles. D'autres tuyaux particulièrement intéressants sont ceux qui transfèrent l'essence entre le réservoir de l'automobile et le moteur. D'autres tuyaux particulièrement utiles sont ceux dans lesquels le polymère (A) est la couche extérieure, ils peuvent être incorporés dans les sols et les murs des logements pour assurer leur chauffage.

L'invention va maintenant être décrite en détails.

Le dimethylcetene peut être obtenu par la pyrolyse de l'anhydride isobutyrique. Cette synthèse a été décrite dans les brevets GB 965762, FR 1381831 et US 3201474. Elle a été aussi décrite dans les articles suivants :
· M. Mugno, M. Bornengo, *Chim. Ind*. (Milan 46,1,5-9, 1964
· G.F. Pregaglia, M. Binaghi, *Makromol. Syn*., 3, 150-160, 1968.

Cette pyrolyse peut s'effectuer entre 550°C et 675°C sous une pression absolue comprise entre 30 et 40 mmHg (3960 et 5280 Pa).

La polymérisation du dimethylcetene pour obtenir le polymère (A) peut s'effectuer en présence d'un catalyseur de formule Al(R1)₃₋ₘXₘ dans laquelle
X est un atome d'halogène
R1 désigne un groupe alkyl, aryl, cycloalkyl ou alkoxy ou un atome d'hydrogène.

A titre d'exemples on peut citer AlCl₂ C₂H₅ ; AlCl(C₂H₅)₂ ; AlC₆H₅Cl₂; Al(OC₃H₇)Br₂ ; AlBr₃ ; AlCl₃ ; ou leurs dimères ou les sesquihalogenures du type AI C₂H₅ Cl₂. Al(C₂H₅)₂ Cl.

On peut aussi utiliser un autre catalyseur tel qu'un composé organométallique d'un métal de la deuxième colonne de la table des éléments ou les complexes de ces composés avec des éthers. On peut citer par exemple les dialkylberyllium, les alkylberylliummonohalogenures, les dialkylmagnesium, les alkylmagnesiummonohalogenures, les dialkyl de zinc et les alkyl de zinc monohalogenures. La polymérisation peut être effectuée entre -100°C et +40°C éventuellement en présence d'un solvant pourvu que le solvant ne réagisse pas avec le monomère et ne décompose pas le catalyseur. A titre d'exemple on peut citer les hydrocarbures aliphatiques, cycliques ou aromatiques et les solvants ayant une constante diélectrique élevée tels que le nitrobenzène, le dichlorométhane, le 1,1,1,2 tetrachloroethane et le 1,1 dichloroéthylène. Cette polymérisation est aussi décrite dans GB 987370 et GB 893908 dont le contenu est incorporé dans la présente demande. Elle est aussi décrite dans les articles suivants :
· G.F.Pregaglia, M. Peraldo, M. Binaghi, *Gazz. Chim. Ital*., 92,488-500, 1962. · G.F.Pregaglia, M.Binaghi, *Makromol. Syn*., 3, 150-165, 1968.
· G. Natta, G. Mazzanti, GF. Pregaglia, M. Binaghi, M. Peraldo, *J. Am. Chem. Soc.,* Vol.82, 4742-4743, 1960.

La proportion de A2 dans le polymère (A) dépend des conditions de polymérisation en particulier de la polarité du solvant.

La proportion de A2 est habituellement (en moles) de 5 à 15 %.

Le polymère (A) est thermoplastique et a les propriétés suivantes :
- dégradation thermique : début de dégradation à partir de 300°C sans stabilisant obtenu par thermogravimétrie à 10°C/mn.
- densité: 1,28
- températures de fusion à 230 et 255°C, pic mesuré par analyse enthalpique différentielle (20°C / mn sous azote).
- viscosité inhérente en solution à 20°C de 0,5 à 3 (pour une solution à 0,5 g/dl dans le metacresol).

On peut mettre en film le polymère (A) par les moyens habituels des thermoplastiques tels que soufflage de gaine, pressage, calandrage, extrusion en filière plate. Les corps creux en (A) peuvent être produits par extrusion (tubes), extrusion soufflage pour les corps creux.

Les films réalisés en polymère (A) et d'épaisseur 5 à 150 µm ont une variation de la perméabilité à l'oxygène (mesurée selon la norme ASTM D 3985-81) en fonction de l'humidité relative (RH) telle que :
le rapport perméabilité à 75 % RH / perméabilité à 0 % RH est compris entre 1,2 et 2 ;
le rapport perméabilité à 95 % RH / perméabilité à 0 % RH est compris entre 1,4 et 2,5.

Pour l'EVOH ces valeurs sont respectivement comprises entre 4 et 15 et entre 8 et 20.

La perméabilité s'exprime en cm³ par m² pour 24 heures pour une différence de pression de 10⁵ Pa et pour une épaisseur.

Pour comparer des films d'épaisseurs différentes on corrige en proportion de l'épaisseur (perméabilité x épaisseur = constante).

La perméabilité à l'oxygène en cm³ / m² - 24 h - 10⁵ Pa - 70 µm est de l'ordre de : 0,15 à 0,20 à 23°C et O % RH
0,2 à 1 à 23°C et 75 % RH.

Ces valeurs sont d'autant plus faibles que la proportion de A2 dans (A) est plus basse.

S'agissant des structures multicouches le polymère (B) peut être par exemple choisi parmi les polyoléfines, les polystyréniques, les polyamides, le polycarbonate, le PVC, le PVDF et les polyesters saturés tel que le PET et le PBT.

A titre d'exemple on peut citer les structures:
(A) / PA-6 ; (A) / (PA-6.6) ; (A) / (PA-6/6.6) ; (A) / PA-11 ; (A) / PA-12 ; (A) / PE ; (A) / polypropylène.

Ces structures ont par exemple des épaisseurs respectives 5 à 30 µm / 15 à 100 µm s'il s'agit de films souples pour faire des sachets.

S'agissant des tubes coextrudés les épaisseurs peuvent être 5 à 10000 µm/0,5 à 5 mm.

S'agissant des corps creux les épaisseurs sont fonction du volume et peuvent être de plusieurs millimètres. Il est recommandé de disposer un liant entre les couches (A) et (B).

A titre d'exemple de liant, on peut citer :
- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle.

On peut aussi ajouter à l'une ou à chacune des couches un produit qui améliore leur adhésion sans devoir utiliser une couche de liant. Ce produit peut être le liant décrit ci-dessus.

Des exemples de liants sont décrits dans les brevets EP 802207, EP 816460, EP 837080 et EP 742236.

S'agissant des structures (A) / liant /polyoléfine des liants particulièrement utiles sont ceux décrits dans EP 816067 et utilisés pour les structures ayant une couche de polycétone de formule 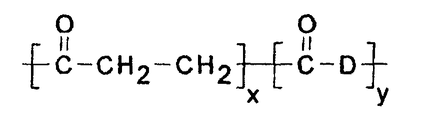 dans laquelle D désigne un monomère insaturé ayant au moins 3 atomes de carbone, le rapport x/y étant au moins 2.

Les motifs 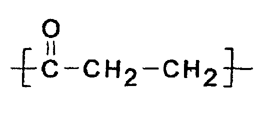 et 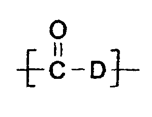 sont répartis au hasard dans la chaîne de polycétone.

Les masses molaires en nombre peuvent être comprises entre 1000 et 200000 avantageusement entre 20000 et 90000 (mesurées par chromatographie à perméation de gel). Les températures de fusion peuvent être comprises entre 175 et 300°C, le plus souvent entre 200 et 270°C.

Des synthèses de ces polycétones sont décrites dans les brevets US 4843144, US 4880903 et US 3694412.

Le liant peut être :
- soit un polymère thermoplastique contenant au moins une fonction hydroxyle pouvant être un copolymère ayant une fonction hydroxyle, un mélange de polymères ayant chacun au moins une fonction hydroxyle ou un mélange d'un polymère ayant au moins une fonction hydroxyle avec un autre polymère ou toute autre combinaison.
- soit un polymère thermoplastique contenant au moins une fonction epoxyde pouvant être un polymère ayant une fonction epoxyde, un mélange de polymères ayant chacun au moins une fonction epoxyde ou un mélange d'un polymère ayant au moins une fonction epoxyde avec un autre polymère ou toute autre combinaison.
- soit un polymère thermoplastique comprenant des motifs éthylène et au moins un motif (méth)acrylate d'alkyle.

S'agissant des structures (A) / liant / polyamide des liants particulièrement utilisés sont des copolyamides. On peut citer par exemple :
le PA 6/6-6 copolymère du caprolactame, de l'hexamethylene diamine et de l'acide adipique
le PA 6/6-6/12 copolymère du caprolactame, de l'hexamethylene diamine de l'acide adipique et du lauryllactame
le PA 6/12 copolymère du caprolactame et du lauryllactame
le PA 6-12 copolymère de l'hexamethylene diamine et de l'acide docecanedioïque.

S'agissant des structures (C) / (A) / (B) le polymère (C) peut être choisi parmi les polymères cités pour (B).

### Exemple 1

15.2 g de dimethylcetene sont distillés sous pression réduite dans un réacteur tubulaire de volume 250 cm³, refroidi à l'azote liquide. Le réacteur est muni d'une ampoule à solvants de 100 cm³ et l'homogénéité du milieu est assurée par un système d'agitation magnétique. Le réacteur est mis ensuite dans un dewar d'acétone dont la température est régulée à -30°C. Le réacteur est remis sous circulation d'azote. On ajoute alors 38 cm³ de tétrachlorure de carbone doucement au milieu et lorsque le mélange est stabilisé à la température du bain, 2.5 cm³ d'une solution de tribromure d'aluminium 0.86 M c'est-à-dire 2,23 g dans 10 cm³ de nitrobenzène sont introduits. La réaction est laissée pendant 5 heures à -30°C puis la nuit dans le réacteur dont on a arrêté le refroidissement. Au bout de 19 heures, la réaction est arrêtée par l'ajout de 20 cm³ de méthanol et le polymère est précipité dans 200 cm³ de méthanol et de 4 cm³ d'acide chlorydrique.

Le polymère est filtré et lavé avec un mélange méthanol et acide chlorydrique, puis avec du méthanol seulement. Il est ensuite séché sous pression réduite à température ambiante pendant au moins 48 heures.

On obtient 8.32 g de polymère dont la structure est vérifiée par spectroscopie infrarouge et RMN¹³C. Il s'agit d'un polymère (A) contenant 95 % de motifs (A1) et 5 % (en moles) de motifs (A2).

### Exemple 2

11.4 g de dimethylcétene sont distillés sur parois froides. Selon la même procédure que celle décrite dans l'exemple 1, on ajoute 28 cm³ de CH₂Cl₂, puis 1.9 cm³ d'une solution d'AlBr₃ 0.87 M c'est-à-dire 2,32 g dans 10 cm³ de nitrobenzène. Après 4 heures de réaction, on ajoute 25 cm³ de méthanol et le polymère est précipité dans 200 cm³ de méthanol et 4 cm³ d'HCl 37 %.

On obtient 5.73 g de polymère (A) contenant 10 % en mole de motifs (A2).

On répète l'exemple 1 pour préparer 15 g de polymère (A) contenant 95 % en moles de motifs (A1) et 5 % en poids de motifs (A2) puis on fabrique deux films:

On fabrique un film d'épaisseur 69 µm par compression et fusion de la poudre de polymère entre deux feuilles d'acier. La perméabilité est mesurée à l'exemple 4.

On fabrique un film d'épaisseur 70 µm par la même méthode. La perméabilité est mesurée à l'exemple 5.

Les films en polymère (A) sont comparés avec des films en EVOH.

EVOH D désigne un copolymère de l'éthylène et de l'alcool vinylique contenant 29 % en mole d'éthylène de MFI 4 à 190°C sous 2,16 kg.

EVOH E désigne un copolymère de l'éthylène et de l'alcool vinylique contenant 38 % en mole d'éthylène de MFI 4 à 190°C sous 2,16 kg.

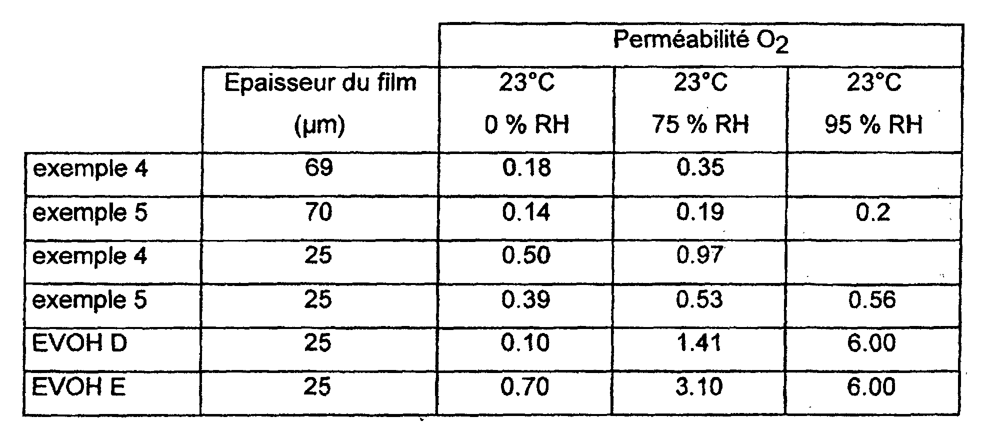

## Revendications

1. Utilisation d'une structure comprenant au moins une couche d'un polymère (A) constitué par les motifs : 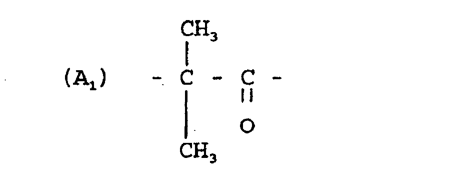 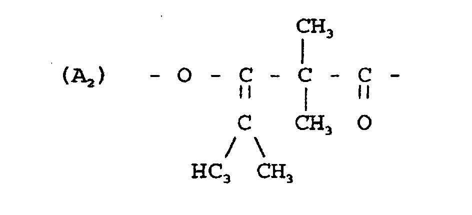 tel que le rapport molaire A₂/(A₁ + A₂) est compris entre 0 et 30 %, pour fabriquer un objet barrière aux gaz, aux hydrocarbures et aux essences pour automobiles.

2. Utilisation selon la revendication 1, **caractérisé en ce que** le rapport (perméabilité à l'O₂ à 75 % RH)/(perméabilité à l'O₂ à 0% RH) est compris entre 1,2 et 2, la perméabilité à l'O₂ étant mesurée selon ASTM D 3985-81.

3. Objet barrière à l'O₂ comprenant une structure comprenant au moins une couche d'un polymère (A) constitué par les motifs : 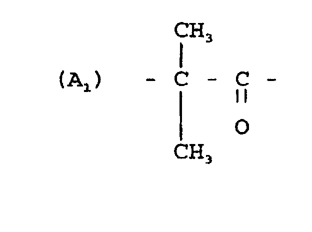 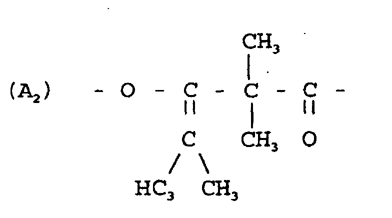 et tel que le rapport molaire A₂/(A₁+A₂) est compris entre 0 et 30 %, ladite structure ayant un rapport (perméabilité à l'O₂ à 75 % RH)/(perméabilité à l'O₂ à 0 % RH) compris entre 1,2 et 2, la perméabilité à l'O₂ étant mesurée selon la norme ASTOM D 3985-81.

4. Objet selon l'une des revendications précédents **caractérisé en ce que** la structure comprend une couche d'un polymère (B) en plus de la couche de polymère (A) choisi parmi les polyoléfines, les spolystyréniques, les polyamides, le polycarbonate, le PVC, le PVDF et les polyesters saturés tel que le PET et le PBT.

5. Objet selon la revendication 4, **caractérisé en ce que** une couche de liant est disposé entre les couches (A) et (B).

6. Objet selon l'une des revendications 4 et 5, **caractérisé en ce que** la structure multicouche comprend une couche d'un polymère (C) choisi parmi les polymères cités pour (B).

7. Objet selon les revendications 4 et 6, **caractérisé en ce que** la structure multicouche comprend respectivement des couches de polymères (C)/(A)/(B), une couche de liant étant disposée entre les couches de polymères (C) et (A) et/ou entre les couches de polymères (A) et (B).

8. Objet selon l'une des revendications précédentes qui est un emballage, un film ou un corps creux tel qu'un tube, une bouteille, un conteneur ou un réservoir d'essence.

## Patentansprüche

1. Verwendung einer Konstruktion, die mindestens eine Schicht aus einem Polymer (A) aus den Einheiten: 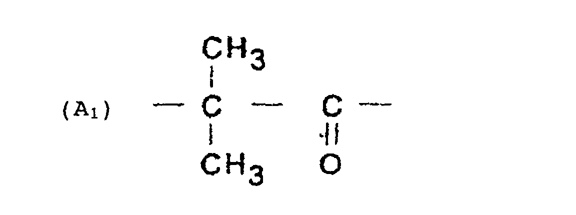 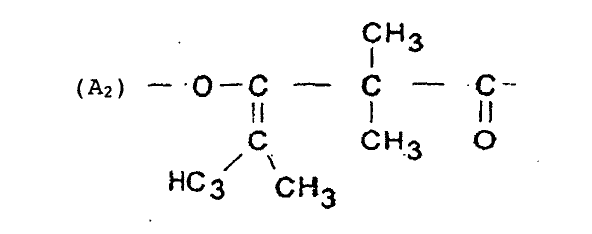 in einem Molverhältnis A₂/(A₁ + A₂) zwischen 0 und 30% enthält, zur Herstellung eines Gas-, Kohlenwasserstoff- oder Autokraftstoffbarrieregegenstands.

2. Verwendung nach Anspruch 1, bei der das Verhältnis von O₂-Durchlässigkeit bei 75% RF zu O₂-Durchlässigkeit bei 0% RF zwischen 1,2 und 2 liegt, wobei die O₂-Durchlässigkeit gemäß ASTM D 3985-81 bestimmt wird.

3. O₂-Barrieregegenstand, enthaltend eine Konstruktion, die mindestens eine Schicht aus einem Polymer (A) aus den Einheiten: 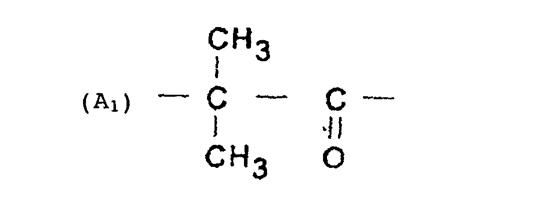 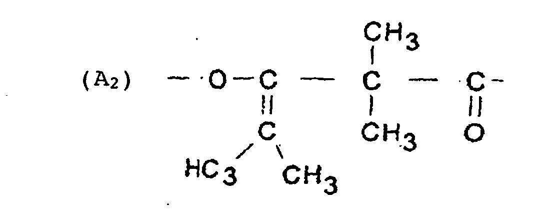 in einem Molverhältnis A₂/(A₁ + A₂) zwischen 0 und 30%
enthält und ein Verhältnis von O₂-Durchlässigkeit bei 75% RF zu O₂-Durchlässigkeit bei 0% RF zwischen 1,2 und 2 aufweist, wobei die O₂-Durchlässigkeit gemäß ASTM D 3985-81 bestimmt wird.

4. Gegenstand nach einem der vorhergehenden Ansprüche, **dadurch gekennzeichnet, daß** die Konstruktion zusätzlich zu der Schicht aus Polymer (A) eine Schicht aus einem Polymer (B), das unter Polyolefinen, Polystyrolen, Polyamiden, Polycarbonat, PVC, PVDF und gesättigten Polyestern wie PET und PBT ausgewählt ist, enthält.

5. Gegenstand nach Anspruch 4, **dadurch gekennzeichnet, daß** zwischen den Schichten (A) und (B) eine Bindemittelschicht angeordnet ist.

6. Gegenstand nach Anspruch 4 oder 5, **dadurch gekennzeichnet, daß** die Mehrschichtkonstruktion eine Schicht aus einem Polymer (C), das unter den für (B) angegebenen Polymeren ausgewählt ist, enthält.

7. Gegenstand nach den Ansprüchen 4 und 6, **dadurch gekennzeichnet, daß** die Mehrschichtkonstruktion Schichten aus Polymeren (C)/(A)/(B) enthält, wobei zwischen den Schichten (C) und (A) und/oder zwischen den Schichten (A) und (B) eine Bindemittelschicht angeordnet ist.

8. Gegenstand nach einem der vorhergehenden Ansprüche, bei dem es sich um eine Verpackung, eine Folie oder einen Hohlkörper, wie ein Rohr, eine Flasche, einen Behälter oder einen Kraftstofftank handelt.

## Claims

1. Use of a structure comprising at least one layer of a polymer (A) composed of the units: 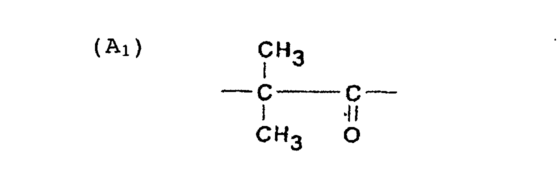 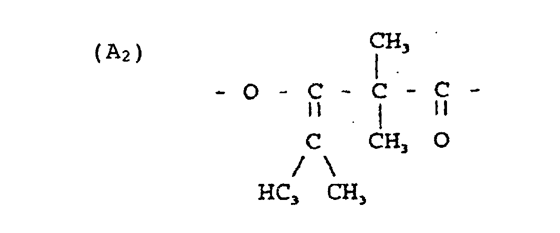 such that the A₂/(A₁ + A₂) molar ratio is between 0 and 30%, to manufacture an object which is a barrier to gases, to hydrocarbons and to petrols for motor vehicles.

2. Use according to Claim 1, **characterized in that** the (permeability to O₂ at 75% RH)/(permeability to O₂ at 0% RH) ratio is between 1.2 and 2, the permeability to O₂ being measured according to ASTM D 3985-81.

3. Object which is a barrier to O₂, comprising a structure comprising at least one layer of a polymer (A) composed of the units: 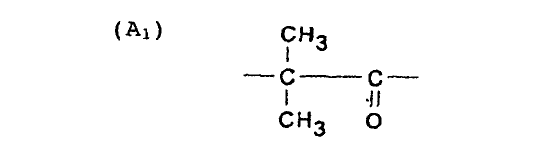 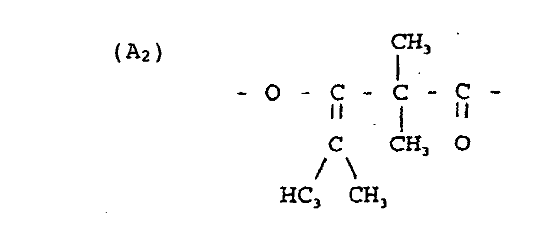 such that the A₂/(A₁ + A₂) molar ratio is between 0 and 30%, the said structure having a (permeability to O₂ at 75% RH)/(permeability to O₂ at 0% RH) ratio of between 1.2 and 2, the permeability to O₂ being measured according to the ASTM D 3985-81 standard.

4. Object according to one of the preceding claims, **characterized in that** the structure comprises, in addition to the layer of polymer (A), a layer of a polymer (B) chosen from polyolefins, polystyrenes, polyamides, polycarbonate, PVC, PVDF and saturated polyesters, such as PET and PBT.

5. Object according to Claim 4, **characterized in that** a layer of binder is positioned between the layers (A) and (B).

6. Object according to either of Claims 4 and 5, **characterized in that** the multilayer structure comprises a layer of a polymer (C) chosen from the polymers mentioned for (B).

7. Object according to Claims 4 and 6, **characterized in that** the multilayer structure respectively comprises layers of polymers (C)/(A)/(B), a layer of binder being positioned between the layers of polymers (C) and (A) and/or between the layers of polymers (A) and (B).

8. Object according to one of the preceding claims, which is a packaging, a film or a hollow body, such as a pipe, a bottle, a container or a petrol tank.
